# EUROPEAN PATENT SPECIFICATION

(11) **EP 3 403 955 B1**
(45) Date of publication and mention of the grant of the patent: **05.07.2023**
(21) Application number: 18171939.4
(22) Date of filing: 11.05.2018
(51) Int. Cl.: B65G 69/00

(54) **BOTTOM SEAL ASSEMBLY FOR DOCK RAMP**
BODENDICHTUNGSANORDNUNG FÜR EINE DOCKRAMPE
ENSEMBLE D'ÉTANCHÉITÉ INFÉRIEURE POUR RAMPE DE QUAI

(30) Priority: 18.05.2017 IE 20170109
(43) Date of publication of application: 21.11.2018
(73) Proprietor: Esidock Limited, Dublin 7 (IE)
(72) Inventor: WHELAN, Francis, County Wexford (IE)
(74) Representative: FRKelly

(56) References cited:
- EP-A1- 0 450 365
- WO-A1-2014/086955
- US-A- 4 293 969
- US-A1- 2002 152 562

## Description

### Field of the Invention

This invention relates to improvements to dock ramps, and in particular, to a bottom seal assembly for use with a dock leveller of a dock ramp.

### Background of the Disclosure

Dock ramps are used in facilities to allow transport vehicles to dock directly with the facility. A ramp, alternatively known as a bridging plate, is used to connect an interior of the facility with an interior of the transport vehicle. In this manner, unloading of goods from the interior of the transport vehicle into the interior of the facility, or, loading of loads from the interior of the facility into the interior of the transport vehicle, can be carried out in a highly efficient manner as the floor of the interior of the transport vehicle is connected in a substantially co-planar manner with the floor of the interior of the facility by way of the ramp. Typically the dock ramps comprise a doorway to keep the facility enclosed when the dock ramp is not in use.

Throughout this specification, the term "transport vehicle" shall be understood to encompass any type of vehicle used for transporting goods. Typically, the transport vehicle will be an articulated truck and trailer; however, it will be apparent that person skilled in the art that vans and other types of commercial transport vehicles may be used with the improved dock ramp of the present invention. The transport vehicles will generally have rear opening doors, which are either pivoting doors or vertically arranged sliding or rolling doors, and the transport vehicles connect with the dock ramps by reversing up to adjacent the dock ramp to load or unload goods through this rear opening door.

Throughout this specification, the term "dock ramp" shall be understood to encompass any type of docking bay used to provide a convenient docking connection between the transport vehicle and the facility. The dock ramp will normally comprise a bridging plate or ramp, to connect between the floor of the interior of the facility and the floor of the interior of the docked transport vehicle. The improved dock ramp of the present invention is suitable to receive transport vehicles of different types and different dimensions. It should be noted that the bottom seal assembly of the present disclosure as applied to the improved dock ramp of the present invention is not intended to be applied to bespoke dock ramps, which are themselves designed to be used with a fleet of transport vehicles having particular dimensions suited to the bespoke dock ramps.

The dock ramps suitable for retro-fit upgrade with the bottom seal assembly of the present invention typically comprise one or two standard bumper pads beneath a docking opening of the dock ramp so as to prevent the transport vehicle from reversing into the dock ramp and damaging the transport vehicle and/or the dock ramp.

In some dock ramps, once the transport vehicle has been reversed to a position adjacent the dock ramp, a quasi-seal is created around the top and sides of the transport vehicle to prevent heat loss from the facility during the loading/unloading process, and, also to prevent external contaminants from entering either the interior of the facility, or, the interior of the transport vehicle during the loading/unloading process. However, as the prior art dock ramps which will be catered for by the present invention must accommodate transport vehicles of different types and dimensions, none of the prior art dock ramps have been able to create a full seal around the transport vehicle once it is docked to the dock ramp. This is due to the fact that the transport vehicles have different floor heights and a bottom seal which can accommodate the varying different heights of the different transport vehicles has proved difficult to design. Most transport vehicles have a loading height in the range of 1 metre to 1.4 metres and the seals currently used in dock ramps known from the prior art cannot accommodate such variations in height between different transport vehicles.

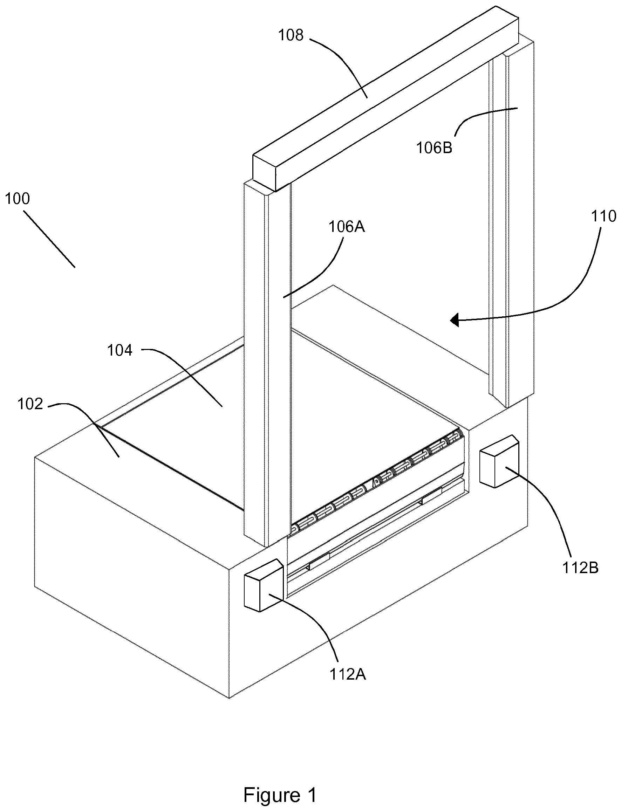

Referring to Figure 1, there is shown a dock ramp in accordance with the prior art indicated generally by reference numeral 100. The dock ramp 100 comprises a facility 102 having a docking floor 104. Side seals 106A, 106B and a top seal 108 are provided at the dock ramp 100. The docking floor 104, the side seals 106A, 106B and the top seal 108 define a docking opening 110 for loading or unloading of goods through. Although it is not shown for clarity, it will be understood that an exterior wall of the facility surrounds the dock ramp 100. Two bumper pads 112A, 112B are provided beneath the docking opening 110 to prevent a transport vehicle which is docking with the dock ramp 100 from damaging the dock ramp 100.

A dock leveller is a device for bridging the gap between a transport vehicle and the docking floor of the facility or warehouse. Dock levellers are fixed to the dock ramp. A dock leveller comprises a metal plate, referred to as a lip, that is raised from a stowed position in the dock ramp and then lowered onto the back of the transport vehicle. The lip is of a hinged type. Dock levellers may be operated either manually, via a simple pull chain, or hydraulically, with an electric pump driving a piston to lift the plate and another one to move the lip.

In use, a transport vehicle (not shown) will reverse up to the dock ramp 100. The bumper pads 112A, 112B may be used by the driver of the transport vehicle to get the transport vehicle very close to the docking opening 110. Rear doors on the transport vehicle are opened and loading/unloading of goods from the transport vehicle into the facility or vice versa then takes place. As can be envisaged with this prior art approach, no seal is created adjacent a bottom portion of the transport vehicle in the vicinity of the bumper pads 112A, 112B.

WO 2014/086955 A1 relates to a bumper and seal assembly for use with a dock ramp, the dock ramp comprising a docking opening defined by a docking floor, a top seal and a pair of side seals; the bumper and seal assembly comprising a pair of substantially vertical, spaced-apart bumper posts for installation beneath the docking opening; each of the pair of spaced-apart bumper posts comprising a substantially vertical guide rail on a side wall of the bumper post, arranged such that the guide rails on the par of bumper posts face one another; the bumper and seal assembly further comprising a bottom seal which is mounted substantially horizontally between the guide rails of the bumper posts, the bottom seal being moveable vertically along the guide rails between a lowered position and a raised, in-use position.

EP 0 450 365 A1 relates to at least one pivotably mounted loading bridge which is supported by its free end on a platform of a vehicle to be loaded or unloaded and can be swung downwards into a ramp recess. To eliminate or minimise heat or cold losses underneath a bridge deck of the loading bridge, a heat-insulating, raisable and lowerable plate-like bridging element for the gap between the loading bridge or the vehicle on the one hand and the base of the ramp recess on the other hand is provided.

It is a goal of the present disclosure to provide an apparatus that overcomes at least one of the above-mentioned problems.

### Summary of the Invention

The present invention is defined by a bottom seal assembly for a dock ramp according to the claim 1 and a dock ramp according to claim 9.

The bottom seal assembly comprises a drive mechanism or biasing means for biasing the bottom seal upwards towards the dock leveller. The drive mechanism or biasing means is configured to constantly urge the bottom seal towards its raised, in-use position. The bottom seal may be biased against an underside of the dock leveller. The bottom seal assembly may be configured to move vertically along guide rails between a lowered position and a raised, in-use position.

The docking opening may be defined by an upper peripheral edge, the dock leveller at the lower peripheral edge, and side peripheral edges. A top seal and a pair of side seals may be provided at the upper peripheral edge and side peripheral edges, respectively.

The bottom seal assembly of the present disclosure is employed with a swing lip dock leveller.

The bottom seal assembly of the present disclosure is configured such that the bottom seal and a follower blind remain in tension at all times. Depending on application the bottom seal may be inflatable or alternatively comprise a compressible material. The bottom seal assembly may be employed in isolation, with a dock shelter or with a foam seal assembly as would be traditional in the industry. The bottom seal assembly may also be employed as a complete solution in tandem with the head sealing apparatus described in WO2016193398.

The advantage of providing the bottom seal assembly which is moveable vertically along guide rails between a lowered position and a raised, in-use position is that a complete seal can be created around the docking opening using a top seal and side seal, which are known from the prior art, and the bottom seal which is moveable along bumper posts. The complete seal allows heat conservation in the facility during loading/unloading and prevents external contaminants from entering the facility during the loading/unloading process.

The bottom seal assembly is particularly advantageous as it allows for a relatively simple retro-fit to an existing dock ramp to convert the quasi-seal offered on the existing dock ramp into a dock ramp offering a complete seal with a docking transport vehicle. Therefore, the downtime during retro-fit upgrading works is minimised with little effect to the operation of the facility. Clearly, the cost of retro-fitting the bottom assembly of the present invention is far less than completely replacing an existing dock ramp having a quasi-seal with a completely new dock ramp assembly having a compete seal.

In a preferred embodiment, the bottom seal assembly comprises a blind which is wound around a roller and is connected to the bottom seal so that the blind is unwound from the roller as the bottom seal is moved vertically up along the guide rails from its lowered position to its raised, in-use position, and, the blind is wound onto the roller as the bottom seal is moved vertically down along the guide rails from its raised, in-use position to its lowered position.

In a preferred embodiment, the bottom seal is an actuatable seal. Preferably, the actuatable seal may comprise an inflatable seal mounted on a support plate. In another embodiment, the seal is a static seal. Preferably the static seal may be made of foam.

In a preferred embodiment, the bottom seal comprises a support panel and an inflatable seal mounted thereon.

In a preferred embodiment, the blind has a width which is approximately equal to the horizontal distance between the spaced-apart bumper posts.

The present disclosure also provides a dock ramp comprising a moveable dock leveller and the bottom seal assembly of the present disclosure as described above. The bottom seal assembly is provided at a lower peripheral edge of a docking opening of the dock ramp. The lower peripheral edge of the docking opening is defined by the moveable dock leveller. The dock ramp may comprise a top seal and a pair of side seals provided at an upper peripheral edge and side peripheral edges, respectively, of the dock ramp. The dock ramp may also comprise the head sealing apparatus described in WO2016193398. That is, the dock ramp may comprise a head sealing apparatus for forming a seal between the top peripheral edge of a substantially vertically-oriented opening and a top surface of an industrially-sized object when the object is positioned within the opening, the head sealing apparatus comprising: a vertically moveable head seal configured to extend downwards over the opening and contact the top surface of the object, and a vertically moveable counterweight arrangement for balancing the load of the head seal so that the height of the head seal is adjustable to allow for variations in the height of the object.

The present disclosure is further directed towards an exemplary, not part of the claimed invention, method of docking a transport vehicle with a facility using a bottom seal assembly of the present disclosure, the method forming a seal between a lower peripheral edge of the facility and the transport vehicle and comprising moving the bottom seal into its raised in-use position so that the bottom seal abuts against an underside of a moveable dock leveller of a dock ramp, thus forming a seal between a lower peripheral edge of the facility and the transport vehicle.

### Detailed Description of the Drawings

The invention will be more clearly understood from the following description of some embodiments thereof, given by way of example only, with reference to the accompanying drawings, in which:
Figure 1 is a partially exposed, perspective view of a dock ramp assembly in accordance with the prior art;
Figure 2 is a perspective exploded view of the components of a bottom seal assembly for application with a dock leveller in a dock ramp, according to an embodiment of the present disclosure.
Figure 3a is a front view of a bottom seal assembly in a normal home position with a swing lip dock leveller, according to an embodiment of the present disclosure;
Figure 3b is a cross-sectional view of the bottom seal assembly of Figure 3a, according to an embodiment of the present disclosure;
Figure 3c is a detailed view of the cross-sectional view of Figure 3b, according to an embodiment of the present disclosure;
Figure 4a is a front view of a bottom seal assembly in a correct parking position with a swing lip dock leveller, according to an embodiment of the present disclosure;
Figure 4b is a cross-sectional view of the bottom seal assembly of Figure 4a, according to an embodiment of the present disclosure;
Figure 4c is a detailed view of the cross-sectional view of Figure 4b, according to an embodiment of the present disclosure;
Figure 5a is a front view of a bottom seal assembly in an incorrect parking position with a swing lip dock leveller, according to an embodiment of the present disclosure;
Figure 5b is a cross-sectional view of the bottom seal assembly of Figure 5a, according to an embodiment of the present disclosure;
Figure 5c is a detailed view of the cross-sectional view of Figure 5b, according to an embodiment of the present disclosure;
Figure 6a is a front view of a bottom seal assembly in a normal working position with a swing lip dock leveller, according to an embodiment of the present disclosure;
Figure 6b is a cross-sectional view of the bottom seal assembly of Figure 6a, according to an embodiment of the present disclosure;
Figure 6c is a detailed view of the cross-sectional view of Figure 6b, according to an embodiment of the present disclosure;
Figure 7a is a front view of a bottom seal assembly in a home position with a telescopic lip dock leveller, according to an embodiment not part of the present invention;
Figure 7b is a cross-sectional view of the bottom seal assembly of Figure 7a, according to an embodiment not part of the present invention;
Figure 7c is a perspective view of the bottom seal assembly of Figure 7a, according to an embodiment not part of the present invention;
Figures 8a to 8d are views of a bottom seal assembly in various working positions with a telescopic lip dock leveller, according to an embodiment not part of the present invention;
Figures 9a and 9b are perspective views of a bottom seal assembly in various working positions with a telescopic lip dock leveller, according to an embodiment not part of the present invention; and
Figure 10 is a perspective view of a dock ramp comprising a bottom seal assembly.

### Detailed Description

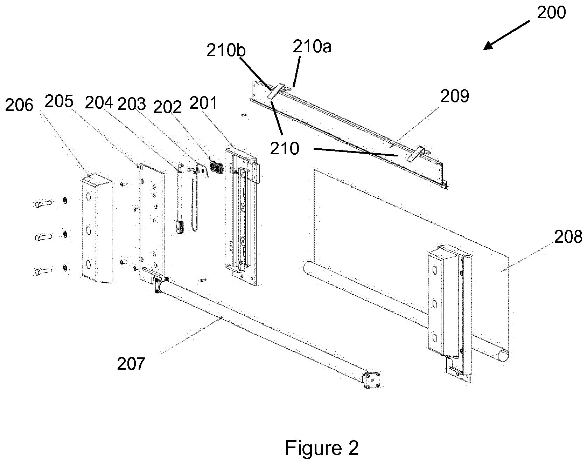

Figure 2 is a perspective exploded view of the components of a bottom seal assembly 200 for application with a dock leveller in a dock ramp, according to an embodiment of the present disclosure. Referring to Figure 2, the bottom seal assembly 200 comprises a drive mechanism for biasing a bottom seal upwards towards the dock leveller. In the present embodiment, the drive mechanism comprises a housing 201, pulleys 202, a cable 203, a gas strut 204, a front cover plate 205, a bumper 206, a spring barrel 207, a blind 208, and a seal plate 209. The bottom seal assembly 200 may further comprise one or more guidance devices 210 configured for a swing lip dock leveller to engage with the seal plate 209. Each of the one or more guidance devices 210 comprises a horizontal section 210a provided to the rear of the seal plate 209 and an inclined section 210b extending forward and downwards in relation to the seal plate 209. The operation of the one or more guidance devices 210 will be further explained later. A bottom seal (not shown) is configured to be mounted to the seal plate 209. The bottom seal may comprise an actable seal or a static seal. The bottom seal may comprise an inflatable seal, a compressible material, or a foam material. The bottom seal assembly 200 of the present disclosure is a non-powered self adjusting mechanism with continuous upward bias facility. In the embodiment described above, the drive mechanism of the bottom seal assembly 200 comprises pulleys, gas struts, wire ropes and associated elements. However, the present disclosure is not limited to this embodiment and other drive mechanisms may be employed. For example, the drive mechanism of the bottom seal assembly may comprise an actuator, springs, and/or counterweights.

The bottom seal is moveable vertically between a lowered position and a raised, in-use position. The bottom seal may be moveable vertically along guide rails between the lowered position and the raised, in-use position. The bottom seal assembly 200 may comprise a pair of substantially vertical, spaced-apart bumpers 206. The bumpers 206 may be constructed of a rubber material. In a more preferable embodiment, the bumpers 206 may be moulded. The spaced-apart bumpers 206 may each comprise a guide rail. The guide rails may be embedded into the bumpers 206 during a moulding process. The guide rails of the spaced-apart bumpers 206 may be arranged such that the guide rails face one another. The seal plate 209 on which the bottom seal is mounted may extend horizontally between the guide rails of the bumpers 206. The bottom seal may be moveable vertically along the guide rails between a lowered position and a raised, in-use position. The spring barrel 207 is located adjacent the lowermost ends of the bumpers 206. The blind 208 is wound around the spring barrel 207 and is connected to the seal plate 209 so that the blind 208 is unwound from the spring barrel 207 when the seal plate 209 moves from its lowered position to its raised, in-use position. The blind 208 may be configured to be wound onto the spring barrel 207 when the seal plate 209 is moved vertically down from its raised, in-use position to its lowered position. The bottom seal assembly of the present disclosure is configured such that the bottom seal and the follower blind 208 remain in tension at all times.

In use, the transport vehicle (not shown) will reverse up to the dock ramp. The bumpers 206, if provided, protect both the transport vehicle and the dock ramp from damage during this reversing procedure. Once in position, the dock leveller of the dock ramp is extended to connect the floor of the interior of the transport vehicle with the docking floor of the facility. The bottom seal moves in conjunction with the dock leveller into its raised, in-use position so as to abut against an underside of the dock leveller. Together with a top seal and side seals, a complete seal may thus be formed around the docked transport vehicle. The loading or unloading process can then be carried out with a complete seal around the docked vehicle and the facility. The bottom seal assembly of the present disclosure is configured such that the bottom seal and the follower blind 208 remain in tension at all times.

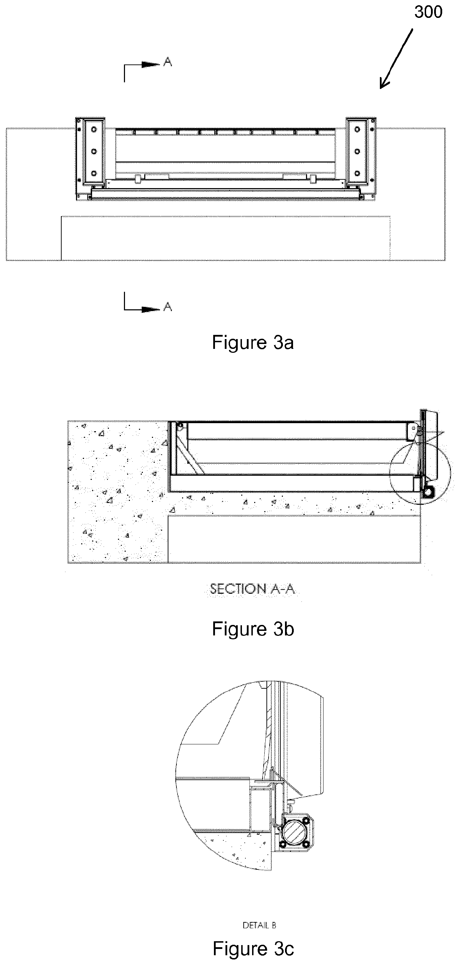

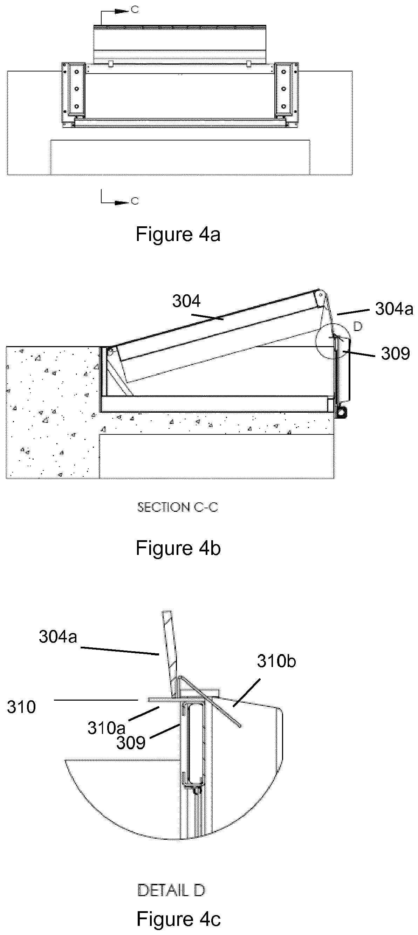

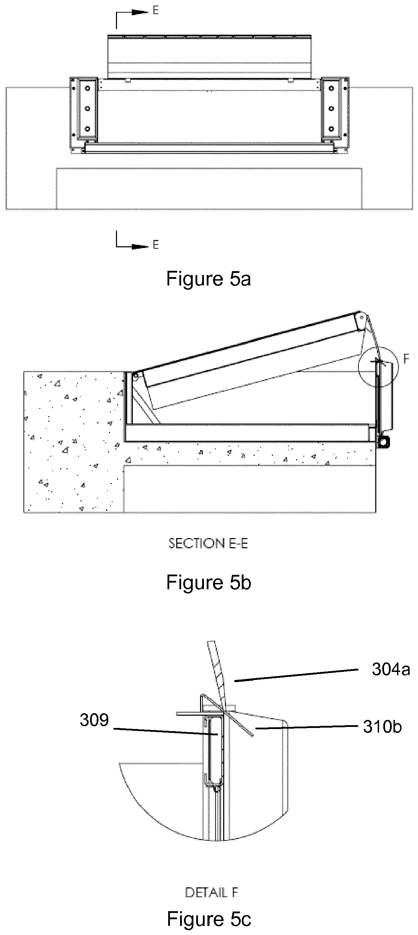

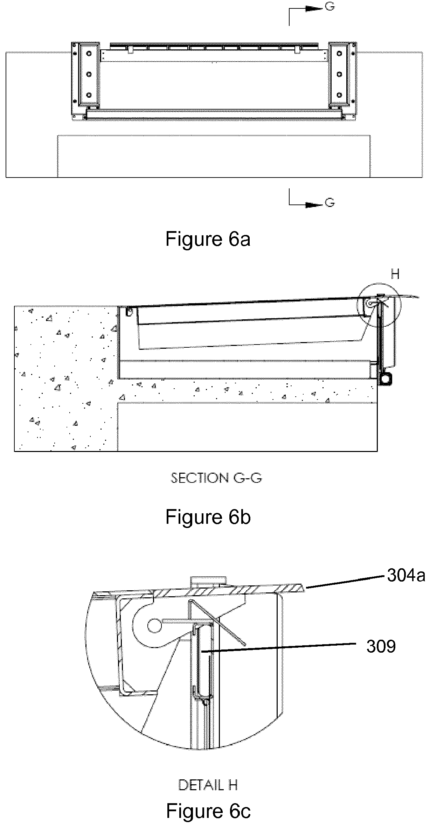

Figures 3 to 6 are various views of a bottom seal assembly 300 for application with a swing lip dock leveller in a dock ramp, according to an embodiment of the present disclosure. Figures 3a to 3c are views of the bottom seal assembly 300 in a normal home position, according to an embodiment of the present disclosure. Figures 4a to 4c are views of the bottom seal assembly 300 in a correct parking position, according to an embodiment of the present disclosure. Figures 5a to 5c are views of the bottom seal assembly 300 in an incorrect parking position, according to an embodiment of the present disclosure. Figures 6a to 6c are views of the bottom seal assembly 300 in a normal working position, according to an embodiment of the present disclosure.

Referring to Figure 3 to 6, the bottom seal assembly 300 is an integrated environmental bottom seal and constitutes an automatic self adjusting mechanism with continuous upward bias facility. The bottom seal is stored in the lower home position and activation in vertical mode is achieved when the dock leveller is energised and will travel to its fully extended position and/or when it makes contact with rear of the vehicle. The operating mechanism of the bottom seal assembly 300 does not require a separate power source. The upward bias employed brings the seal plate to its maximum height whereupon the bottom seal may be biased towards the parked vehicle. After the bottom seal is employed and the dock ramp engaged, the bottom seal is free to float in a vertical motion in synchronicity with the movements of the ramp and vehicle. The drive mechanism for the bottom seal assembly 300 is mounted in a concealed fabricated compartment behind the dock bumpers. The drive mechanism comprises pulleys, gas struts, wire ropes and associated elements. In this regard, the drive mechanism for the bottom seal assembly 300 may comprise elements 201 to 206 illustrated in Figure 2. Referring to Figures 3a to 3c, the seal is returned to home position by the aid of the downward motion of the dock leveller when parking.

As mentioned above, Figures 4a to 4c are views of the bottom seal assembly 300 in a correct parking position, according to an embodiment of the present disclosure. Referring to Figure 4c, one or more guidance devices 310 may be provided at a top edge of a seal plate 309. The one or more guidance devices 310 are configured for a swing lip 304a of a dock leveller 304 to engage with the seal plate 309. Each of the one or more guidance devices 310 comprises a horizontal section 310a provided to the rear of the seal plate 309 and an inclined section 310b extending forward and downwards in relation to the seal plate 309. Referring to Figure 4b, in a parked position, when the swing lip 304a of the dock leveller 304 is elevated, the swing lip 304a engages the horizontal section 310a of the guidance device 310 and the upward bias of the bottom seal assembly brings the seal plate 309 upwards with the swing lip 304a.

Referring to Figures 5a to 5c, in use the dock leveller 304 is raised with the seal plate 309, the seal plate 309 is brought to its maximum height, and the dock leveller 304 is raised further. Then, the swing lip 304a is lowered and is configured to engage with the inclined section 310b of the guidance device 310, thereby forcing the swing lip 304a to rotate and extend outwards towards the vehicle.

As mentioned above, Figures 6a to 6c are views of the bottom seal assembly 300 in a normal working position, according to an embodiment of the present disclosure. Referring to Figures 6a to 6c, the swing lip 304a is configured in a substantially horizontal position and the seal plate 309 to which the bottom seal is mounted is biased against the underside of the dock leveller 304.

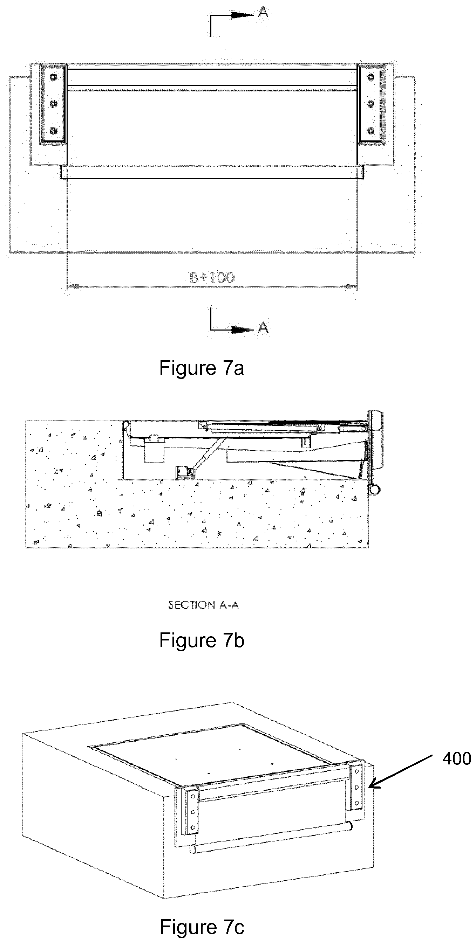

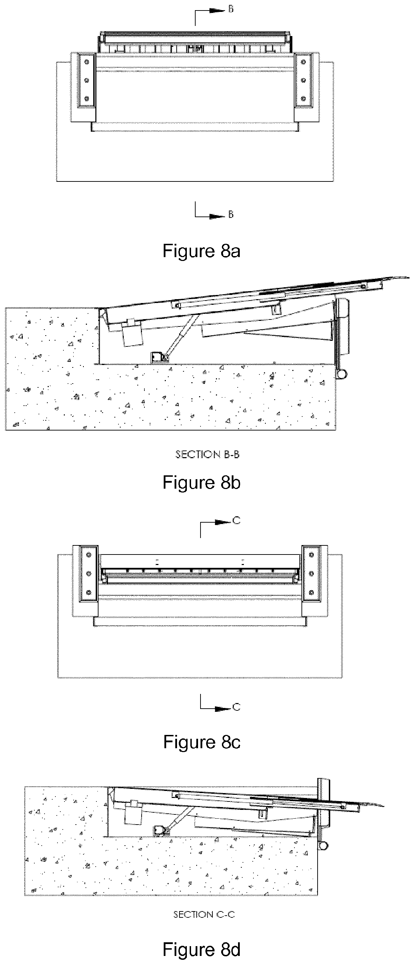

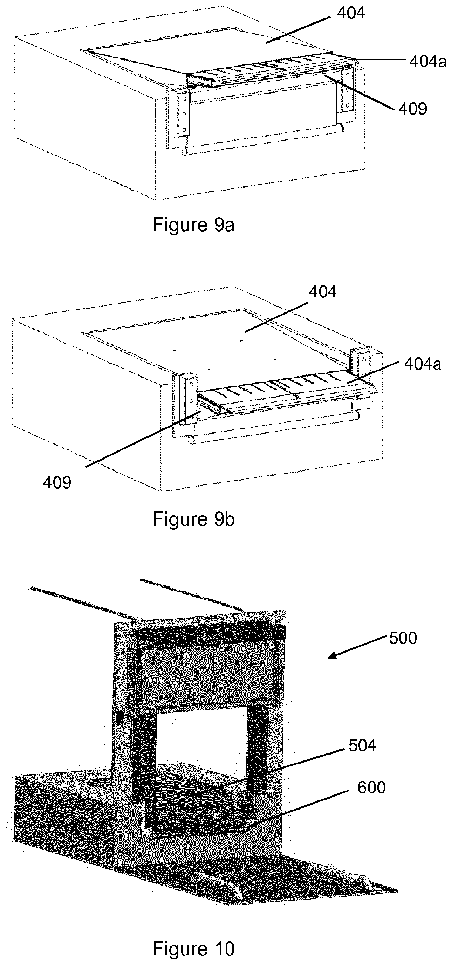

In an alternative embodiment, the bottom seal assembly of the present disclosure may be employed with a telescopic lip dock leveller. Figures 7 to 9 are various views of a bottom seal assembly 400 for use with a telescopic lip dock leveller, according to an embodiment of the present disclosure. Referring to Figures 9a and 9b, when a telescopic lip 404a is extended from a dock leveller 404 to be elevated or lowered, respectively, a seal plate 409 is biased upwards against the underside of the dock leveller 404, thereby forming a seal between the lower peripheral edge of the dock ramp and the floor of the vehicle.

Figure 10 is a perspective view of a dock ramp 500 comprising a bottom seal assembly 600, according to an embodiment of the present disclosure. The bottom seal assembly 600 corresponds to any of the bottom seal assemblies 300 and 400 described above. The dock ramp 500 comprises a moveable dock leveller 504 corresponding to any of the moveable dock levellers 304 and 404 described above. The bottom seal assembly 600 is provided at a lower peripheral edge of the docking opening of the dock ramp 500. The lower peripheral edge of the docking opening is defined by the moveable dock leveller 504. The dock ramp 500 may comprise a top seal and a pair of side seals provided at an upper peripheral edge and side peripheral edges, respectively, of the dock ramp 500.

The bottom seal may be an actable seal or a static seal. The term "actable seal" when used in context of the preceding specification will be understood to refer to a seal which can act to transition itself between an operable state and an inoperable state. It will be understood that the act could comprise inflation and deflation of a sealing bladder, mechanical extension and retraction of a sealing lip, and the like. It will be further understood that static seals such as foam seals may be used.

The terms "comprise" and "include", and any variations thereof required for grammatical reasons, are to be considered as interchangeable and accorded the widest possible interpretation.

The scope of the invention is defined by the appended claims.

## Claims

1. A bottom seal assembly (200, 300) for a dock ramp comprising a docking opening defined by a moveable swing lip dock leveller at a lower peripheral edge of the docking opening;
the bottom seal assembly (200, 300) comprising a seal plate (209, 309) and a bottom seal which is mounted substantially horizontally and moveable vertically with the dock leveller between a lowered position and a raised, in-use position at the lower peripheral edge of the docking opening; and further comprising
at least one guidance device (210, 310) configured for the swing lip dock leveller to engage with the seal plate (209, 309) and comprising a horizontal section (210a, 310a) provided to the rear of the seal plate (209, 309) and an inclined section (210b, 310b) extending forward and downwards in relation to the seal plate.

2. The bottom seal assembly (200, 300) of claim 1, comprising a biasing mechanism for biasing the bottom seal upwards towards the dock leveller.

3. The bottom seal assembly (200, 300) of claim 2, wherein the biasing mechanism is configured to constantly urge the bottom seal towards its raised, in-use position.

4. The bottom seal assembly (200, 300) of claim 2, wherein the biasing mechanism is configured to bias the bottom seal against an underside of the dock leveller.

5. The bottom seal assembly (200, 300) of any preceding claim, where the bottom seal is configured to move vertically along guide rails between a lowered position and a raised, in-use position.

6. The bottom seal assembly (200, 300) of any preceding claim, further comprising a follower blind (208) which is wound around a roller and is connected to the bottom seal so that the blind is unwound from the roller as the bottom seal is moved vertically up from its lowered position to its raised, in-use position, and being configured such that the bottom seal and the follower blind remain in tension at all times.

7. The bottom seal assembly (200, 300) of any preceding claim, wherein the bottom seal comprises an actuatable seal or a static seal.

8. The bottom seal assembly (200, 300) of claim 7, wherein the bottom seal comprises a compressible material.

9. A dock ramp comprising the bottom seal assembly (200, 300) according to any preceding claim and a moveable dock leveller, wherein the dock leveller comprises a swing lip dock leveller.

10. The dock ramp of claim 9, wherein the bottom seal assembly (200, 300) is provided at a lower peripheral edge of the docking opening, the lower peripheral edge being defined by the moveable dock leveller.

11. The dock ramp of any of claims 9 to 10, wherein the docking opening is defined by an upper peripheral edge, the dock leveller at the lower peripheral edge, and side peripheral edges.

12. The dock ramp of claim 11, comprising a top seal and a pair of side seals provided at the upper peripheral edge and side peripheral edges, respectively, of the dock ramp.

## Patentansprüche

1. Bodendichtungsanordnung (200, 300) für eine Dockrampe, die eine Andocköffnung umfasst, die durch eine bewegliche Schwenklippen-Überladebrücke an einer unteren Umfangskante der Andocköffnung definiert ist;
wobei die Bodendichtungsanordnung (200, 300) eine Dichtungsplatte (209, 309) und eine Bodendichtung umfasst, die im Wesentlichen horizontal montiert und vertikal mit der Überladebrücke zwischen einer abgesenkten Position und einer angehobenen Gebrauchsposition an der unteren Umfangskante der Andocköffnung beweglich ist; und weiter umfassend
mindestens eine Führungsvorrichtung (210, 310), die zum Eingreifen der Schwenklippen-Überladebrücke in die Dichtungsplatte (209, 309) konfiguriert ist und einen horizontalen Abschnitt (210a, 310a), der an der Rückseite der Dichtungsplatte (209, 309) vorgesehen ist, und einen geneigten Abschnitt (210b, 310b), der sich in Bezug auf die Dichtungsplatte nach vorne und unten erstreckt, umfasst.

2. Bodendichtungsanordnung (200, 300) nach Anspruch 1, umfassend einen Vorspannmechanismus zum Vorspannen der Bodendichtung nach oben in Richtung der Überladebrücke.

3. Bodendichtungsanordnung (200, 300) nach Anspruch 2, wobei der Vorspannmechanismus dazu konfiguriert ist, die untere Dichtung ständig in Richtung ihrer angehobenen Gebrauchsposition zu drücken.

4. Bodendichtungsanordnung (200, 300) nach Anspruch 2, wobei der Vorspannmechanismus dazu konfiguriert ist, die Bodendichtung gegen eine Unterseite der Überladebrücke vorzuspannen.

5. Bodendichtungsanordnung (200, 300) nach einem der vorhergehenden Ansprüche, wobei die Bodendichtung dazu konfiguriert ist, sich vertikal entlang von Führungsschienen zwischen einer abgesenkten Position und einer angehobenen Gebrauchsposition zu bewegen.

6. Bodendichtungsanordnung (200, 300) nach einem der vorhergehenden Ansprüche, ferner umfassend einen mitlaufenden Rolladen (208), der auf eine Rolle gewickelt und mit der Bodendichtung verbunden ist, sodass der Rolladen von der Rolle abgewickelt wird, wenn die Bodendichtung von ihrer abgesenkten Position vertikal nach oben in ihre angehobene Gebrauchsposition bewegt wird, und derart konfiguriert ist, dass die Bodendichtung und der mitlaufende Rolladen jederzeit unter Spannung bleiben.

7. Bodendichtungsanordnung (200, 300) nach einem der vorhergehenden Ansprüche, wobei die Bodendichtung eine betätigbare Dichtung oder eine statische Dichtung umfasst.

8. Bodendichtungsanordnung (200, 300) nach Anspruch 7, wobei die Bodendichtung ein komprimierbares Material umfasst.

9. Dockrampe, umfassend die Bodendichtungsanordnung (200, 300) nach einem der vorhergehenden Ansprüche und eine bewegliche Überladebrücke, wobei die Überladebrücke eine Schwenklippen-Überladebrücke umfasst.

10. Dockrampe nach Anspruch 9, wobei die Bodendichtungsanordnung (200, 300) an einer unteren Umfangskante der Andocköffnung vorgesehen ist, wobei die untere Umfangskante durch die bewegliche Überladebrücke definiert ist.

11. Dockrampe nach einem der Ansprüche 9 bis 10, wobei die Andocköffnung durch eine obere Umfangskante, die Überladebrücke an der unteren Umfangskante und seitliche Umfangskanten definiert ist.

12. Dockrampe nach Anspruch 11, umfassend eine obere Dichtung und ein Paar Seitendichtungen, das an der oberen Umfangskante bzw. den seitlichen Umfangskanten der Dockrampe vorgesehen ist.

## Revendications

1. Ensemble d'étanchéité inférieur (200, 300) pour une rampe de quai comprenant une ouverture d'amarrage définie par un niveleur de quai à lèvre pivotante mobile au niveau d'un bord périphérique inférieur de l'ouverture d'amarrage ;
l'ensemble d'étanchéité inférieur (200, 300) comprenant une plaque d'étanchéité (209, 309) et un joint d'étanchéité inférieur qui est monté sensiblement horizontalement et mobile verticalement avec le niveleur de quai entre une position abaissée et une position relevée d'utilisation au niveau du bord périphérique inférieur de l'ouverture d'amarrage ; et comprenant en outre
au moins un dispositif de guidage (210, 310) configuré pour que le niveleur de quai à lèvre pivotante s'engage avec la plaque d'étanchéité (209, 309) et comprenant une section horizontale (210a, 310a) prévue à l'arrière de la plaque d'étanchéité (209, 309) et une section inclinée (210b, 310b) s'étendant vers l'avant et vers le bas par rapport à la plaque d'étanchéité.

2. Ensemble d'étanchéité inférieur (200, 300) selon la revendication 1, comprenant un mécanisme de sollicitation pour solliciter le joint d'étanchéité inférieur vers le haut en direction du niveleur de quai.

3. Ensemble d'étanchéité inférieur (200, 300) selon la revendication 2, dans lequel le mécanisme de sollicitation est configuré pour pousser constamment le joint d'étanchéité inférieur vers sa position relevée d'utilisation.

4. Ensemble d'étanchéité inférieur (200, 300) selon la revendication 2, dans lequel le mécanisme de sollicitation est configuré pour solliciter le joint d'étanchéité inférieur contre une face inférieure du niveleur de quai.

5. Ensemble d'étanchéité inférieur (200, 300) selon une quelconque revendication précédente, dans lequel le joint d'étanchéité inférieur est configuré pour se déplacer verticalement le long des rails de guidage entre une position abaissée et une position relevée d'utilisation.

6. Ensemble d'étanchéité inférieur (200, 300) selon l'une quelconque des revendications précédentes, comprenant en outre un store suiveur (208) qui est enroulé autour d'un rouleau et est relié au joint d'étanchéité inférieur de sorte que le store est déroulé du rouleau lorsque le joint d'étanchéité inférieur est déplacé verticalement vers le haut de sa position abaissée à sa position relevée d'utilisation, et étant configuré de telle sorte que le joint d'étanchéité inférieur et le store suiveur restent sous tension à tout moment.

7. Ensemble d'étanchéité inférieur (200, 300) selon une quelconque revendication précédente, dans lequel le joint d'étanchéité inférieur comprend un joint actionnable ou un joint statique.

8. Ensemble d'étanchéité inférieur (200, 300) selon la revendication 7, dans lequel le joint d'étanchéité inférieur comprend un matériau compressible.

9. Rampe de quai comprenant l'ensemble d'étanchéité inférieur (200, 300) selon une quelconque revendication précédente et un niveleur de quai mobile, dans laquelle le niveleur de quai comprend un niveleur de quai à lèvre pivotante.

10. Rampe de quai selon la revendication 9, dans laquelle l'ensemble d'étanchéité inférieur (200, 300) est prévu au niveau d'un bord périphérique inférieur de l'ouverture d'amarrage, le bord périphérique inférieur étant défini par le niveleur de quai mobile.

11. Rampe de quai selon l'une quelconque des revendications 9 à 10, dans laquelle l'ouverture d'amarrage est définie par un bord périphérique supérieur, le niveleur de quai au bord périphérique inférieur et des bords périphériques latéraux.

12. Rampe de quai selon la revendication 11, comprenant un joint d'étanchéité supérieur et une paire de joints d'étanchéité latéraux prévus au niveau du bord périphérique supérieur et des bords périphériques latéraux, respectivement, de la rampe de quai.
